# EUROPEAN PATENT SPECIFICATION

(11) **EP 3 881 669 B1**
(45) Date of publication and mention of the grant of the patent: **07.05.2025**
(21) Application number: 21162167.7
(22) Date of filing: 11.03.2021
(51) Int. Cl.: A01D 46/24, A01D 46/00, A01D 46/253, A01D 46/30, B64C 39/00, B25J 11/00, B25J 15/06, B65G 47/91

(54) **DEVICE AND METHOD FOR FRUIT HARVESTING**
VORRICHTUNG UND VERFAHREN ZUM ERNTEN VON FRÜCHTEN
DISPOSITIF ET PROCÉDÉ POUR LA RÉCOLTE DE FRUITS

(30) Priority: 15.03.2020 IL 27331620
(43) Date of publication of application: 22.09.2021
(73) Proprietor: TEVEL AEROBOTICS TECHNOLOGIES LTD, 7174910 Modiin (IL)
(72) Inventor: MAOR, Yaniv, 7174910 Modiin (IL); SHIFMAN, Elad, 7040002 Gedera (IL); ELI, Moshe, 7408516 Ness Ziona (IL)
(74) Representative: Derry, Paul Stefan

(56) References cited:
- CN-U- 204 443 138
- JP-A- H01 300 822
- US-A- 3 460 327
- US-A1- 2018 146 618
- US-A1- 2019 283 217

## Description

### FIELD OF THE INVENTION

The present invention is in the technical field of agriculture technology, specifically autonomous harvesting. More particularly, the present invention relates to devices, systems and methods for harvesting fruits, such as apples, pears, apricots, peaches, citrus fruits, small-citrus fruit, lemon, avocado, vines, tomatoes, eggplants, cucumbers and peppers.

### BACKGROUND

A human picker picks fruits by pulling and rotating the fruit simultaneously. Pulling a fruit without rotating it can damage the fruit or its shell, e.g. the fruits' shell integrity, which exposes the inside of the fruit to the surroundings and shortens the fruit's shelf life. Moreover, pulling without rotation requires applying strong pulling forces. Notably, pulling while rotating requires holding the fruit strong enough to prevent slipping thereof.

Conventional fruit harvesting devices are equipped with a gripper designed to grasp the fruit and pull it off. The gripper usually comprises a few fingers (e.g. 3) that grab the fruit. One main disadvantage of known grippers is that the gripper's footprint is big and may get stacked in branches and leaves when trying to access a fruit. Another disadvantage is that the fingers of the gripper may damage the fruit or its skin due to high squeezing pressure. Another problem is that standard fruit gripper heads show difficulty in gripping irregular shapes of fruits, and thus tend to apply excessive pressure that may cause bruising. An Additional problem is that the gripper may also grab leaves together with the fruit: since fruits are usually covered with leaves, grabbing with fingers can lead to holding a fruit together with the leaves. This may cause any of the following: applying stronger forces in order to pick the fruit with the leaves; tearing the leaves off the tree, which damages the tree and does not meet fruit picking requirements (fruit without leaves); and inability to pick the fruit.

Accordingly, a need exists for an efficient and harm-free gripper.

Some robotic companies use suction to suck fruits through a suction pipe, but such pipes cannot actually hold the fruit. Moreover, such suction pipes are big, clumsy, expensive, and might damage the fruits.

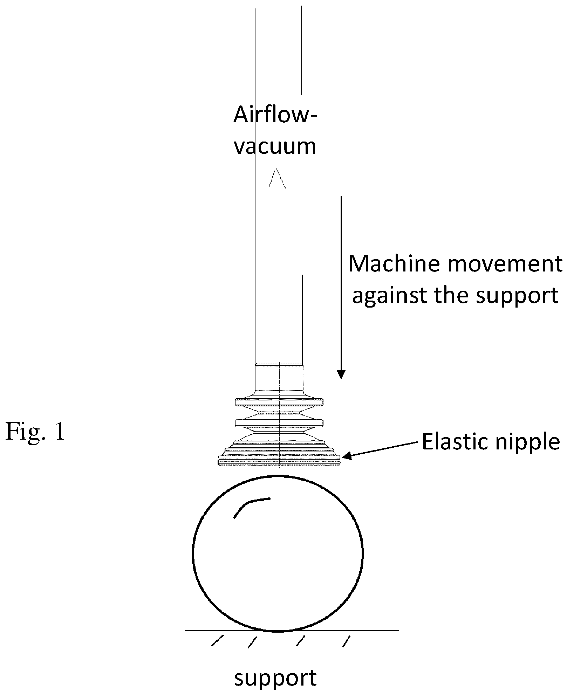

In various industrial factories, such as fruit-sorting facilities, robotic vacuum-gripping devices are used. Such vacuum grippers constitute a vacuum generator connected to a flexible nipple (e.g. silicone or rubber): the gripper is designed to attach the flexible nipple to an object to be lifted and push the object against a surface/support (e.g. the bottom of a container, a table or a treadmill) and creating vacuum to attach the object to the nipple. Fig. 1 illustrates such a gripper with a standard flexible nipple and its mechanism of action.

However, such vacuum grippers are required to push the object against a solid support, while the flexible nipple is squeezed and changes its shape according to the object's shape. Normally, the gripper itself is not soft (80 shor) since it needs to push the nipple onto the object and against a solid surface. Moreover, if the nipple would be too flexible, the internal vacuum that is generated will squeeze the nipple and cause its deformity while holding the object.

In addition, the design of current vacuum grippers does not enable them to apply rotation powers, which means that an attempt to twist the object sucked to the gripper, which the object is anchored, will result in loss of vacuum and the releasing of the object.

Various other suction-based grippers have been developed, but none demonstrate the ability of keeping hold of the sucked object when tilting and rotation forces are applied thereon. For instance, the MIT-Harvard origami-robot-gripper having irregular shape designed to engulf fruits with arbitrary shapes and changing size and Soft-Robotics' starfish-like-gripper, both require hard support to engulf a fruit and will lose grip if twisted when the fruit is still anchored to the tree.

Accordingly, a need exits for an efficient vacuum-gripper that can be used on "floating" objects (without a solid surface behind), as well as can withstand rotation powers applied on anchored floating objects.

JP H01 300822 discloses a fruit and vegetable harvester.

CN 204 443 138 discloses an air-suction type oil tea fruit picking machine.

### SUMMARY OF THE INVENTION

The claims define the matter for protection.

### BRIEF DESCRIPTION OF THE DRAWINGS

**Fig. 1** is an illustration of a common knowledge vacuum-gripper: a nipple at the edge of the gripper is attached to an object and pushes it against a support to grip the object.
**Figs. 2A-2C** are illustrations of the structure of a suction-nipple according to one embodiment of the invention, showing the interlock mechanism that enables to apply both pulling- and rotation- forces without disconnection of the nipple from the fruit.
**Fig. 3** is an illustration of a multi-arm robot that can rotate, and each time pick a different fruit with a different arm.
**Fig. 4** is an illustration of a flying robot that can rotate, and each time pick a different fruit with a different arm.
**Figs. 5A-5B** are illustration of attaching a vacuum-gripper of the invention to a "floating" fruit.
**Fig. 6** is an illustration of the rotation of a vacuum-gripper according to the invention.
**Figs. 7A-7B** illustrate rotation of a fruit for picking: **Fig. 7A** illustrates the angle of approaching to the fruit; and **Fig. 7B** illustrates the rotating of the suction-nipple along an axis of the fruit's stem after vacuum-attaching the fruit.
**Figs. 8A-8B** are illustrations of a gripping assembly according to some embodiments of the invention with joints enabling pivoting the nipple.
**Figs. 9A-9C** are illustrations of ways to release a fruit from a gripper: **Fig. 9A** illustrates the releasing of a fruit from a straight gripper, without bending capabilities; **Fig. 9B** illustrates the releasing of a fruit from a bending/tilting gripper capable of pivoting the suction-nipple; and **Fig. 9C** illustrates the extending of the suction-nipple as vacuum is released prior to the release of the fruit therefrom.

### DETAILED DESCRIPTION

In agriculture, there is a constant requirement for machines and equipment for harvesting fruits, of all types, especially those with soft shells that tend to bruise during picking, such as apples, pears, apricots, peaches, citrus fruits, avocado, tomatoes, eggplants, cucumbers and peppers. Accordingly, various machines and harvesters have been developed, usually designed for picking a specific type of fruit or family of fruits.

The present invention provides a suction-based fruit picking assembly that can be mounted-on and used in any harvesting machine/device, such as autonomous harvesters and flying autonomous harvesters.

Accordingly, in a first aspect, the present invention provides a suction/vacuum-nipple, designed to be used, e.g., for harvesting, the nipple comprising an interlock mechanism that prevent the release of a fruit to which the nipple it attached during rotational movement of the harvester or support arm connected to the nipple. The suction-nipple has two configurations: (i) a first open-configuration when the nipple is not attached to a fruit (or to any other desired object) and no vacuum is generated between the fruit and nipple, in which configuration the interlock mechanism is in an open-orientation enabling free twisting of the nipple on its axis; and (ii) a second locked/cramped-configuration when the nipple is attached to a fruit (or to any other desired object) and vacuum/sucking is applied, in which configuration the interlock mechanism is in a locked-orientation that prevents any twisting of the nipple on its axis, which prevent deforming of the nipple's shape which might cause the release of the fruit therefrom.

The terms "vacuum" and "suction" as used herein interchangeably refer to negative pressure or generation thereof, i.e., by the removal of air from a space, i.e. between the suction-nipple of the invention and an object (e.g., a fruit), thereby enabling attachment / adhesion of the nipple to the object.

In certain embodiments, the suction/vacuum-nipple of the invention is flexible thereby enabling its fitting to any shape and size. Accordingly, the suction-nipple of the invention can be used for harvesting any type, size and shape of fruit or vegetable without damaging or dropping the fruit. When the suction-nipple of the invention is used for other purposes, e.g. industry, sorting, etc., it can be used for picking objects of any type, size and shape, without risking of damaging or dropping such objects.

In certain embodiments, the suction-nipple of the invention is made of any suitable flexible material such as rubber, silicon, etc.

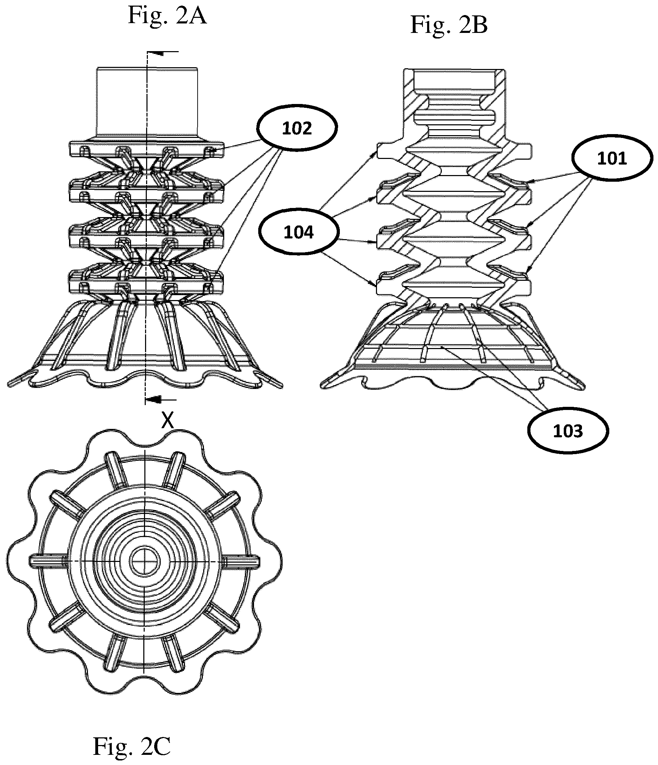

In certain embodiments, and as illustrated in **Figs. 2A-2C****,** the suction-nipple of the invention comprises ribs **103** designed to maintain the shape of the flexible nipple. Such ribs **103** provide stability and rigidity that prevent deformity and closure of the nipple's head that is attached to the fruit. In specific embodiments, such ribs 103 are part of the interlock mechanism. As illustrated, the interlock mechanism may comprise grooves and bulges / protrusions **101,102** that interact with one another when the suction-nipple is cramped due to attachment of a fruit and application of vacuum/suction. Such interaction of the bulges / protrusions **101,102** locks the interlock mechanism and prevents rotation/ twisting of the nipple's head holding the fruit, thereby preventing deformity thereof and undesired release of the fruit therefrom. This is essential during the harvesting process in which various forces are applied on the fruit for releasing it from the tree/branch, such as tilting and rotation to disconnect the fruit's stem.

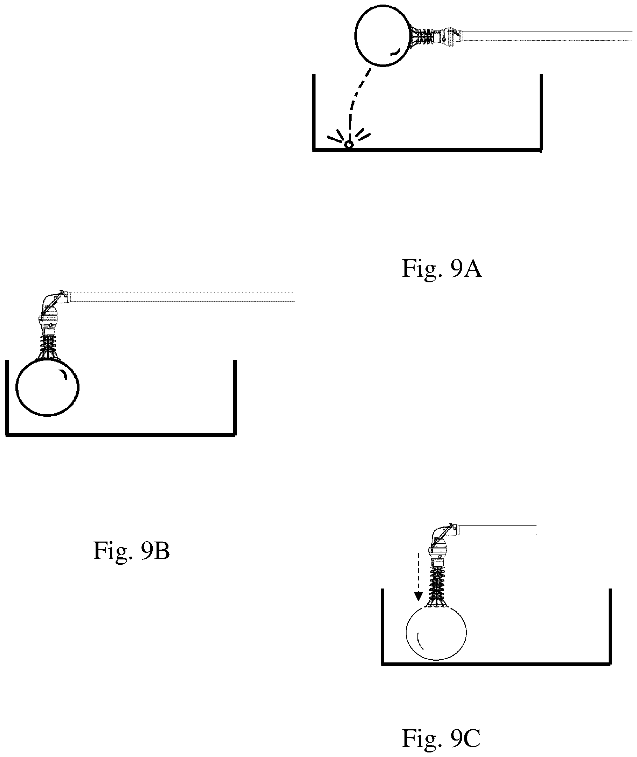

In certain embodiments, and as illustrated in **Figs. 2A-2C****,** the suction-nipple of the invention is extending corrugated tube-shaped with two, three, four, five or more units/rings **104,** each equipped with rigid bulges / protrusions **101,102** that interact with one another when the suction-nipple is cramped due to attachment of a fruit and application of vacuum/suction. In certain embodiments, the rigid bulges / protrusions **101,102** further aid in maintaining the extending corrugated tube-shape nipple in an extended orientation when no fruit is attached/sucked. This may also aid in extending the overall length of the nipple to reach dipper/remote fruits. This extending corrugated tube-shaped structure further enables extending of the nipple during the releasing of a fruit therefrom (see illustrated in **Fig. 9C**), which aids in smother release of the fruit (gentle fruit dispatching), which further reduces the risk of damage to the fruit from falling into a fruit-collection container.

When a suction-nipple according to the invention comes in contact with a fruit that needs picking, and vacuum is applied, the pressure inside the nipple is lowered (i.e. vacuum begins to generate) and ribs that constitutes part of the locking mechanism within the nipple's frame are squeezed one against the other. Finally, when the nipple is fully squeezed, the locking mechanism is in its locked-orientation, which enables applying forces on the fruit for picking, such as rotation and tilting forces, without releasing the nipple from the fruit.

In certain embodiments, the extending corrugated tube-shaped suction-nipple is somewhat flexible thereby enabling pivoting the tip of the nipple (e.g. when a fruit is sucked thereto) relative to a amin axis of an assembly comprising the nipple. This configuration provide flexibility and extends maneuvering capabilities of a harvesting machine/robot equipped with an assembly with such a suction-nipple.

The present invention further provides a suction-nipple that has a closed-configuration with small footprint that enables easy insertion through a tree's foliage when vacuum/suction is off, and an open-configuration that enables the nipple to fit onto a fruit, wherein the transition from a closed-configuration to an open-configuration is carried out by activation of vacuum/suction.

The suction-nipple according to any of the embodiments herein can be used as part of the suction/vacuum-based fruit gripper assembly as defined hereinbelow.

In a second aspect, the present invention provides a suction/vacuum-based fruit gripper assembly for use in a fruit-picking machine, said assembly comprising: (a) a support having a main axis and receivable onto a fruit-picking machine, said support comprising an aperture therethrough for communication with a source of suction generator; and b) a gripping suction-nipple for engaging a fruit, mounted on said support and connected to said aperture, wherein said nipple is designed to withstand rotational forces when attached to a fruit by suction/vacuum.

In specific embodiments of the above assembly, the nipple is made of rigid material(s), such as rubber, plastic, polycarbonate, etc., enabling it to withstand said rotational forces. In alternative specific embodiments, the nipple is made of a semi-rigid material that enables it to adapt its shape according to a fruit's shape while also withstand said rotational forces after sucking onto the fruit. In further alternative specific embodiments, the nipple is made of layers of the same or different flexible material(s), such as silicon and soft rubber, wherein the amount and/or combination of the different layers enable the nipple to withstand said rotational forces while maintaining its capability of engulfing various-shaped and sized fruits.

In specific embodiments, the above assembly further comprising an interlock mechanism that enables the nipple to withstand said rotational forces, said interlock mechanism two configurations: (i) a first open-configuration when the nipple is not attached to a fruit and no vacuum/suction is generated, in which said interlock mechanism is open; and (ii) a second locked-configuration when the nipple is attached to a fruit and vacuum/suction is applied, in which said interlock mechanism is locked thereby preventing twisting of the nipple. In alternative specific embodiments, the nipple is a flexible nipple equipped with an interlock mechanism that enables it to withstand said rotational forces, said nipple has two configurations: (i) a first open-configuration when the nipple is not attached to a fruit and no vacuum/suction is generated, in which said interlock mechanism is open and the nipple is free to twist; and (ii) a second locked/cramped-configuration when the nipple is attached to a fruit and vacuum/suction is applied, in which said interlock mechanism is locked thereby preventing twisting of the nipple. In specific embodiments thereof, the interlock mechanism is a mechanic element. In alternative specific embodiments, the interlock mechanism is a locking engine.

In a third aspect, the present invention provides a suction/vacuum-based fruit gripper assembly for use in a fruit-picking machine/robot, said assembly comprising: (a) a support having a main axis and receivable onto a fruit-picking machine, said support comprising an aperture therethrough for communication with a source of vacuum/suction generator; and (b) a flexible gripping suction-nipple for engaging a fruit, mounted on said support and connected to said aperture, wherein said nipple is equipped with an interlock mechanism and has two configurations: (i) a first open-configuration when the nipple is not attached to a fruit and no vacuum is generated, in which said interlock mechanism is open and the nipple is free to twist on its axis; and (ii) a second locked/cramped-configuration when the nipple is attached to a fruit and vacuum is applied, in which said interlock mechanism is locked thereby preventing twisting of the nipple on its axis.

The interlock mechanism of the suction-nipple as defined above comprises grooves and bulges, such that when the interlock mechanism is in its open-configuration, the grooves and bulges are separated from one another, and when it is in its cramped-configuration, i.e. when a fruit is sucked thereby, the grooves and bulges are engaged with one another.

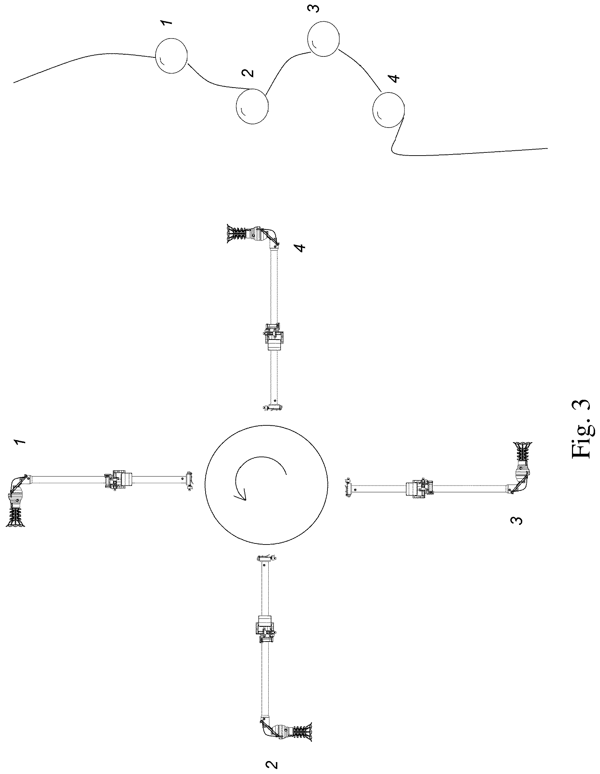

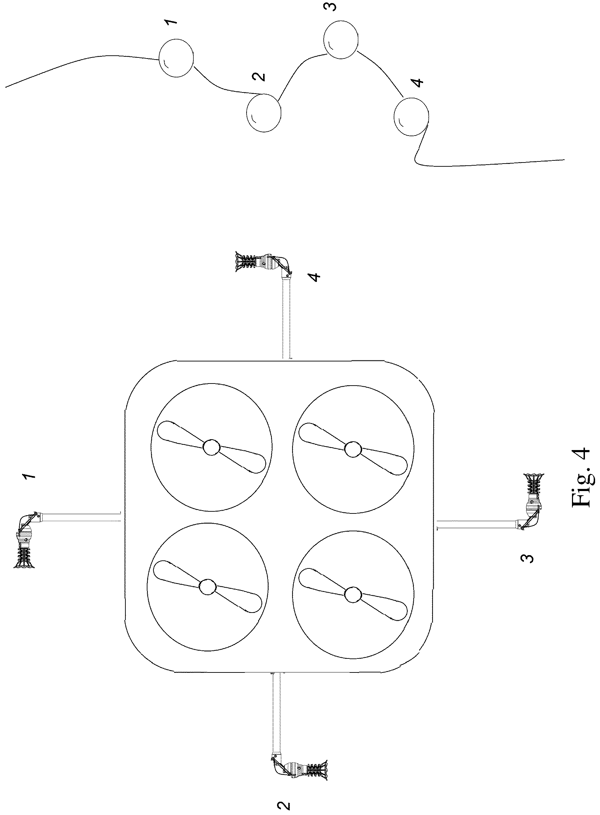

In certain embodiments, the assembly of the invention can be connected-to / mounted-on any suitable machine such as a harvester, an autonomous harvester, and an autonomous flying harvester. Moreover, such a machine can be equipped with one, two, three, four, five, six or more assemblies. See **Figs. 3** **and** **4** illustrating a harvester (**Fig. 3**) and a flying harvester (**Fig. 4**) equipped with four such assemblies, wherein the machine can turn to enable each assembly to pick a different fruit each time. Such a configuration enables a single machine to harvest two, three, four, five, six or more fruits at once, depending on the number of assemblies, before returning to a fruit-collection container for discharging the harvested fruits therein. Notably, the unique structure of the suction-nipple of the assembly enable firm gripping of the fruit by each assembly, so that picked fruits do not fall off during the picking of fruits by another assembly.

In certain embodiments, the assembly of the invention further comprises a vacuum/ suction-generator. Such a generator may be associated with a single assembly, or a single generator may be used for multiple assemblies mounted onto the same machine/harvester. In case the assembly does not include such a vacuum/suction-generator, the machine/ harvester to which the assembly is mounted on comprises such a generator, and during mounting the assembly thereon it is connected to the vacuum-generator. In certain embodiments, when a single vacuum-generator is used for multiple assemblies on the same machine/harvester, the machine/harvester further comprise a computer that controls the activation/deactivation of the suction/vacuum in each one of the assemblies.

In certain embodiments of the assembly according to any of the embodiments above, the support is extendable and retractable. This enables extending the suction-nipple to reach more remote fruits or fruits dipper in the leafage.

In certain embodiments, the assembly according to any of the embodiments above, further comprises an agitation mechanism / motor design to tilt a fruit sucked by the assembly back and forth and/or right and left in order to release it from the tree/branch.

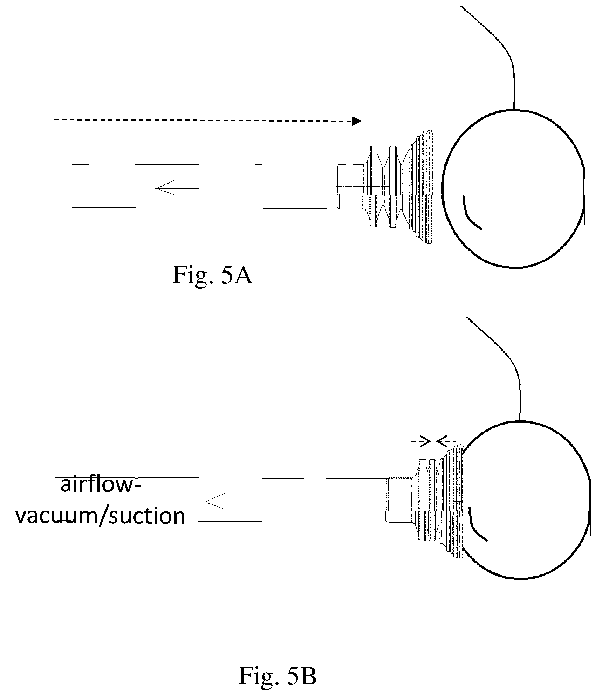

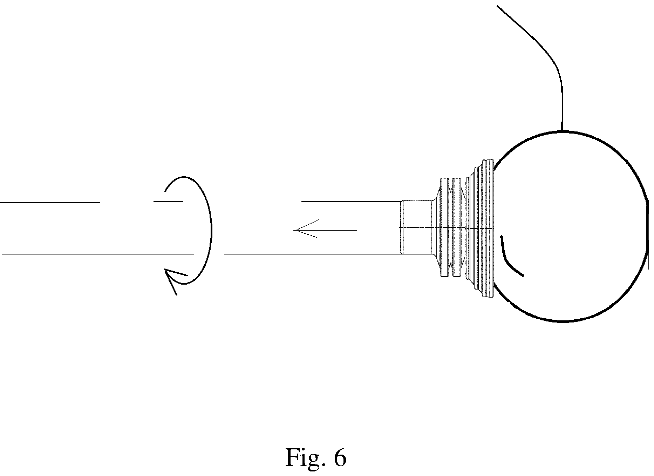

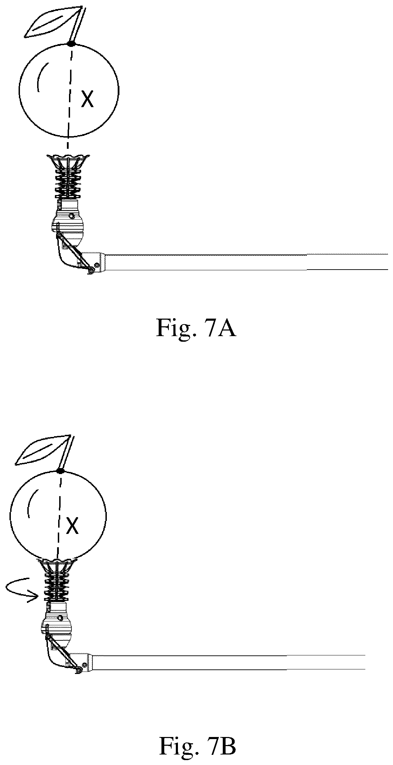

In certain embodiments of the assembly according to any of the embodiments above, the support can rotate along said main axis. In alternative embodiments, only the suction-nipple can rotate, e.g., along said main axis or in any other axis, i.e. if it is pivoted away from the support relative to the main axis (see illustrated in **Figs. 7A-7B**). Accordingly, in specific embodiments, the assembly of the invention further comprises a rotation motor for rotating and/or tilting the support (all or part thereof) or only the suction-nipple. **Fig. 6** illustrates the rotation of the support after a fruit is attached/sucked by the suction-nipple. This rotation enables to free a fruit from the tree/branch without damaging the fruit's stem or shell as happen when pulling the fruit straight off the tree. Once a suction-nipple reaches a fruit (**Fig. 5A**), vacuum/suction is applied to adhere the fruit to the nipple (**Fig. 5B**), which results in squeezing/cramping of the nipple and locking of its locking mechanism (**Fig. 5B**), which enables to rotate the fruit by rotating the gripper, its support or the nipple. Such rotation generates a rotation force on the fruit and assists in removal of the fruit from the tree/branch without damaging the fruit.

Notably, standard known suction-nipples cannot maintain hold of a fruit under rotation forces, since the shape of the nipple will be distorted leading to releasing of the vacuum/suction between the fruit and the nipple, and the falling of the fruit from the nipple and gripper. Contrary to that, in certain embodiments, the suction-nipple according to any of the embodiments above can withstand rotation forces (moment) of up to 1 kgf-meter, while holding / sucking a fruit without distorting and loosing grip of the fruit.

**Figs. 7A-7B** illustrate an assembly in which the suction-nipple is pivoted in a 90-degree relative to the support. As illustrated, the assembly accesses a fruit from a direction opposite to the fruit's stem, holds the fruit with vacuum/suction, and then the suction-nipple rotates to release the fruit from the tree/branch. The rotation axis is around the stem, which leads to disconnection of the stem from the tree/branch without disconnecting the stem from the fruit and without damaging the fruit (as done when harvesting oranges, nectarines and other citrus fruits).

In certain embodiments of the assembly according to any of the embodiments above, the support further comprises one or more pivotal joints enabling pivoting the suction-nipple in any direction relative to the main axis. In specific embodiments, the support comprises a single joint, essentially along the support. In alternative specific embodiments, the support comprises a single joint, essentially at the tip, i.e. at the connection point with the suction-nipple. In alternative specific embodiments, the support comprises two or more joints, one essentially at the tip, i.e. at the connection point with the suction-nipple, and the other(s) essentially along the support.

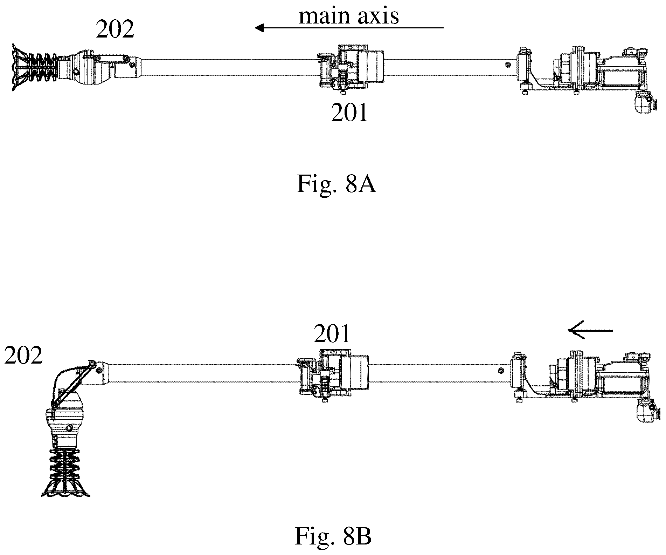

**Figs. 8A-8B** illustrate such an assembly with two joints: one **201** essentially in the middle of the support, and another **202** at the connection point of the support with the suction-nipple. In certain embodiments, the pivotal are operated by a designated motor.

In certain embodiments, the assembly of the invention further comprises an additional elbow/joint that enable easier access to fruits that are covered by leaves, i.e. by tilting the end of the support with the nipple or the nipple itself to reach such fruits from a different side with less leaves.

In certain embodiments, the assembly according to any of the embodiments above has three degrees of freedom obtainable by a combination of: (i) a rotation ability, i.e. by a rotation mechanism rotating the support or the nipple; (ii) a front/back movement generated by a push/pull mechanism or by the movement of the machine/harvester itself; and optionally (iii) by the use of pivotal joints. The combination of these features generates tilt and yaw required for picking a fruit off a tree/branch without damaging it, its stem or its shell.

In certain embodiments, the assembly according to any of the embodiments above further comprises a tilting mechanism/motor for moving said support along said main axis for tilting a fruit gripped by said nipple. In specific embodiments, said tilting mechanism is based on a push/pull mechanism operated by the suction/vacuum generator, i.e. by transferring/utilizing suction/vacuum power to linear movement of the support or joint therein. In alternative or added embodiments, the tilting mechanism/motor is used for moving the nipple and fruit sucked thereto not along the main axis, e.g. in a vertical orientation to the main axis, i.e. by tilting the nipple itself right/left and/or up/down, while maintaining the support steady. In further alternative embodiments, the tilting of the fruit is carried out simultaneously along and away from the main axis, i.e. by moving the support back and forth while tilting the nipple itself right/left and/or up/down.

In certain embodiments of the assembly according to any of the embodiments above, the flexible gripping nipple is affixed to said support along said main axis and cannot pivot relative to the support. In alternative embodiments, the flexible gripping nipple is affixed to said support pivoted away from a central axis thereof and cannot pivot. In further alternative embodiments, the flexible gripping nipple is mounted onto said support by a pivotal mounting element for pivotal movement generally toward and away from said main axis in any angle.

The term "pivot" as used herein refer to the movement relative to an axis. The movement can be in any angle between 0 and 90 degrees, such as 5, 10, 15, 20, 25, 30, 35, 40, 45, 50, 55, 60, 65, 70, 75, 80, and 85 degrees.

In a fourth aspect, the present invention provides a machine comprising or equipped with one or more assemblies according to any of the embodiments above. In specific embodiments, the machine is a fruit-picking/harvesting machine designed to harvest fruits at an orchard. The number of assemblies mounted-on or attached-to the machine may vary and can be one, two, three, four, five, six or more. In specific embodiments, when more than one assembly is mounted-on or attached-to the machine, the movement and operation of each assembly is independent from the other(s). This means that while one assembly picks a fruit, the other(s) await its turn or await with a fruit sucked to its suction-nipple.

In certain embodiments, the machine according to the invention is an autonomous machine, such as an autonomous harvesting machine. In specific embodiments, the machine is a ground harvester, optionally autonomous. In further specific embodiments, the autonomous harvesting machine is a flying harvesting robot
In certain embodiments, the present invention provides an autonomous harvesting flying machine/robot that comprises one, two, three, four, five, six or more assemblies according to any of the embodiments above. In specific embodiments, when the flying robot comprises two or more assemblies, the robot can rotate in order to enable picking a different fruit each time with a different assembly. **Figs. 3** **and** **4** illustrate a robot or flying robot, respectively, equipped with four assemblies, wherein once a fruit is picked by one assembly, the robot turns or a constellation holding the assemblies is turned to bring the next assembly into contact with the next fruit for picking. Once all assemblies have picked a fruit, the robot brings the fruits to a fruit-collection container, releases the fruits and returns to pick more fruits.

In certain embodiments, the assemblies are mounted-on / connected-to the robot's body directly, such that in order to bring one assembly towards a fruit, the entire robot needs to turn to that direction. In such configuration, the robot may be equipped with a movable vision system that can move/rotate in order to maintain visual sight with the fruit during turning and approaching the fruit. In alternative embodiments, the assemblies are mounted-on / connected-to a rotatable constellation on the robot's body, such that the assemblies can rotate around freely without changing the robot's body direction. In such configuration, in order to bring one assembly towards a fruit, the robot simply turns/rotates the constellation, without losing sight of the fruit and without moving the robot's body, to bring the assembly to the direction of the fruit for picking.

In a fifth aspect, the present invention provides a method for harvesting fruits, comprising the steps of mounting or attaching one or more assemblies according to any of the embodiments above onto a fruit-picking machine, and activating same, thereby enabling each assembly on the machine to approach a fruit, attach thereto by suction/vacuum via the suction-nipple, and pick the fruit off the tree/branch, and releasing the fruit at a desired location, e.g., into a fruit-collection container.

**Fig. 9A** illustrates standard known release of a fruit from a gripper: the gripper releases the fruit into a fruit-collection container from the edge of the container, thus letting the fruit fall to the bottom of the container from a distance/height. **Figs. 9B-9C** illustrate the releasing of a fruit from a flexible suction-nipple according to the invention. In specific embodiments, the nipple is connected to a support/arm via a pivotal joint that enable the nipple to pivot at an essentially 90-degree relative to the support's main axis. As illustrated, the nipple is bend into the fruit-collection container, and as the vacuum/suction is slowly released, nipple is extracted and pulled down partially by the weight of the fruit, until the vacuum/suction is released and the fruit is gently placed onto the bottom of the container, leaving the nipple in an extracted-open orientation ready to receive a new fruit.

Notably, even when the container is much dipper, the slow release of the fruit from the nipple dramatically reduces the falling speed of the fruit and reduces damage due to the fall. Alternatively, the suction-nipple of the invention may comprise multiple units/rings **104** that extend the overall length of the nipple and enable it to gently place a fruit at the bottom of a container at any depth (in accordance with the number of rings **104**).

In specific embodiments of the above harvesting method, the activation of the fruit-picking machine leads to suction-gripping a fruit by the suction-nipple, and the picking of the fruit is carried by twisting and/or tilting the fruit until it is released from the tree/branch, wherein the picking of the fruit is without damaging the fruit or its shell. In specific embodiments, when it is preferable to maintain the fruit's stem after picking, the method enables picking a fruit while keeping the stem attached to the fruit, i.e. by disconnecting the stem from the tree/branch and not from the fruit.

In certain embodiments, the method according to any of the embodiments above further comprises a step of continuously rotating the gripper assembly during its penetration into a tree's foliage, such that said rotation enables penetration of the suction nipple through the tree's foliage.

In certain embodiments, the method according to any of the embodiments above further comprises a step of identifying the direction of the fruit's stem and determining the stem-axis, followed by attaching the suction-nipple to the fruit along the determined stem-axis, thereby rotating the fruit along this stem-axis. This enables to disconnect the fruit from the tree/branch while maintain the stem on the fruit.

## Claims

1. A vacuum-based fruit gripper assembly for use in a fruit-picking machine, said fruit gripper assembly comprising:
a) a support having a main axis and receivable onto a fruit-picking machine, said support comprising an aperture therethrough for communication with a source of suction generator; and
b) a flexible gripping suction-nipple for engaging a fruit, mounted on said support and connected to said aperture,
wherein said nipple is equipped with an interlock mechanism, and wherein said nipple has two configurations:
- a first open-configuration when the nipple is not attached to a fruit and no vacuum is generated, in which said interlock mechanism is open and the nipple is free to twist; and
- a second locked-configuration when the nipple is attached to a fruit and vacuum is applied and the nipple is cramped due to the attachment of the fruit and the application of vacuum, in which said interlock mechanism is locked thereby preventing twisting of the nipple,
**characterized in that** said interlock mechanism comprises ribs (103), and wherein the interlock mechanism comprises grooves and bulges or protrusions (101,102) that interact with one another when the nipple is cramped.

2. The assembly of claim 1, wherein the nipple is made of a semi-rigid material or layers of the same or different flexible material that enables it to adapt its shape according to a fruit's shape .

3. The assembly of claim 1, further comprising at least one of: i) a vacuum -generator; ii)a tilting motor for moving said support along said main axis for tilting a fruit gripped by said nipple; and iii) a rotation motor for rotating or tilting said nipple and/or said support along said main axis.

4. The assembly of any one of the preceding claims, wherein said support is: i) extendable and retractable; ii) can rotate along said main axis; and/or iii) equipped with one or more pivotal joints enabling pivoting the nipple relative to said main axis.

5. The assembly of any one of the preceding claims, wherein said flexible gripping suction-nipple is: i) affixed to said support along said main axis; ii) affixed to said support pivoted away from a central axis thereof; or iii) mounted onto said support by a pivotal mounting element for pivotal movement generally toward and away from said main axis.

6. The assembly of any one of the preceding claims, wherein when the interlock mechanism is in its open-configuration, the grooves and bulges or protrusions are separated from one another, and when it is in its locked-configuration the grooves and bulges or protrusions are engaged with one another.

7. A fruit-picking machine comprising one or more assemblies of any one of the preceding claims, wherein when the machine comprises two or more of said assemblies, the movement of each assembly is independent from the other or others.

8. The fruit-picking machine of claim 7, which is a flying harvesting robot.

9. A method for harvesting fruits, comprising the steps of mounting one or more assemblies according to any one of claims 1-6 onto a fruit-picking machine, and activating same, wherein: i) activation of the fruit-picking machine leads to suction-gripping a fruit by said suction-nipple, and the picking of the fruit is carried by twisting and/or tilting the fruit until it is released; and/or ii) said method optionally comprises a step of continuously rotating said gripper assembly during its penetration into a tree's foliage, such that said rotation enables penetration of the suction nipple through the tree's foliage.

## Patentansprüche

1. Vakuumbasierte Baugruppe zum Greifen von Früchten zur Verwendung in einer Maschine zum Pflücken von Früchten, wobei die Baugruppe zum Greifen von Früchten Folgendes umfasst:
a) eine Stütze mit einer Hauptachse und aufnehmbar an einer Maschine zum Pflücken von Früchten, wobei die Stütze eine Öffnung dort hindurch zur Kommunikation mit einer Sauggeneratorquelle umfasst; und
b) einen flexiblen Greifsaugnippel zum Ergreifen einer Frucht, der auf der Stütze montiert und mit der Öffnung verbunden ist,
wobei der Nippel mit einem Verriegelungsmechanismus ausgestattet ist und wobei der Nippel zwei Konfigurationen aufweist:
- eine erste offene Konfiguration, wenn der Nippel nicht an einer Frucht angebracht ist und kein Vakuum erzeugt wird, in welcher der Verriegelungsmechanismus offen ist und sich der Nippel frei drehen kann; und
- eine zweite verriegelte Konfiguration, wenn der Nippel an einer Frucht angebracht ist und Vakuum angelegt wird und der Nippel aufgrund der Anbringung der Frucht und der Anlegung von Vakuum verkrampft ist, in welcher der Verriegelungsmechanismus verriegelt ist, wodurch Verdrehen des Nippels verhindert wird,
**dadurch gekennzeichnet, dass**
der Verriegelungsmechanismus Rippen (103) umfasst und wobei der Verriegelungsmechanismus Nuten und Ausbuchtungen oder Vorsprünge (101, 102) umfasst, die miteinander interagieren, wenn der Nippel verkrampft ist.

2. Baugruppe nach Anspruch 1, wobei der Nippel aus einem halbstarren Material oder Schichten desselben oder anderem flexiblen Material hergestellt ist, das ihm ermöglicht, seine Form gemäß der Form einer Frucht anzupassen.

3. Baugruppe nach Anspruch 1, ferner umfassend zumindest eines von: i) einem Vakuumgenerator; ii) einem Kippmotor zum Bewegen der Stütze entlang der Hauptachse zum Kippen einer Frucht, die durch den Nippel ergriffen wird; und iii) einem Rotationsmotor zum Drehen oder Kippen des Nippels und/oder der Stütze entlang der Hauptachse.

4. Baugruppe nach einem der vorhergehenden Ansprüche, wobei die Stütze: i) ausfahrbar und einziehbar ist; ii) sich entlang der Hauptachse drehen kann; und/oder iii) mit einem oder mehreren Schwenkgelenken ausgestattet ist, die Schwenken des Nippels relativ zu der Hauptachse ermöglichen.

5. Baugruppe nach einem der vorhergehenden Ansprüche, wobei der flexible Greifsaugnippel: i) an der Stütze entlang der Hauptachse befestigt ist; ii) an der Stütze befestigt ist, die von einer Mittelachse davon weggeschwenkt ist; oder iii) an der Stütze durch ein Schwenkmontageelement für Schwenkbewegung im Allgemeinen zu und weg von der Hauptachse montiert ist.

6. Baugruppe nach einem der vorhergehenden Ansprüche, wobei, wenn der Verriegelungsmechanismus in seiner offenen Konfiguration ist, die Nuten und Ausbuchtungen oder Vorsprünge voneinander getrennt sind, und wenn er in seiner verriegelten Konfiguration ist, die Nuten und Ausbuchtungen oder Vorsprünge in Eingriff miteinander sind.

7. Maschine zum Pflücken von Früchten, die eine oder mehrere Baugruppen nach einem der vorhergehenden Ansprüche umfasst, wobei, wenn die Maschine zwei oder mehr der Baugruppen umfasst, die Bewegung jeder Baugruppe unabhängig von der anderen oder den anderen ist.

8. Maschine zum Pflücken von Früchten nach Anspruch 7, die ein fliegender Ernteroboter ist.

9. Verfahren zum Ernten von Früchten, umfassend die Schritte des Montierens von einer oder mehreren Baugruppen nach einem der Ansprüche 1-6 an einer Maschine zum Pflücken von Früchten und des Aktivierens derselben, wobei: i) Aktivierung der Maschine zum Pflücken von Früchten zu Sauggreifen einer Frucht durch den Saugnippel führt und das Pflücken der Frucht durch Verdrehen und/oder Kippen der Frucht durchgeführt wird, bis sie freigegeben ist; und/oder ii) das Verfahren optional einen Schritt des kontinuierlichen Drehens der Greiferbaugruppe während ihres Eindringens in das Laub eines Baums umfasst, sodass die Drehung Eindringen des Saugnippels durch das Laub des Baums ermöglicht.

## Revendications

1. Ensemble de préhension de fruit à base de vide destiné à une utilisation dans une machine de cueillette de fruits, ledit ensemble de préhension de fruit comprenant :
a) un support comportant un axe principal et pouvant être reçu sur une machine de cueillette de fruits, ledit support comprenant une ouverture à travers celui-ci pour une communication avec une source de générateur d'aspiration ; et
b) un embout d'aspiration de préhension flexible destiné à venir en prise avec un fruit, monté sur ledit support et relié à ladite ouverture,
dans lequel ledit embout est équipé d'un mécanisme de verrouillage, et dans lequel ledit embout comporte deux configurations :
- une première configuration ouverte lorsque l'embout n'est pas fixé à un fruit et qu'aucun vide n'est généré, où ledit mécanisme de verrouillage est ouvert et l'embout est libre de se tordre ; et
- une seconde configuration verrouillée lorsque l'embout est fixé à un fruit et qu'un vide est appliqué et que l'embout est étriqué en raison de la fixation du fruit et de l'application du vide, où ledit mécanisme de verrouillage est verrouillé, empêchant ainsi une torsion de l'embout, **caractérisé en ce que**
ledit mécanisme de verrouillage comprend des nervures (103), et dans lequel le mécanisme de verrouillage comprend des rainures et des renflements ou des saillies (101, 102) qui interagissent les uns avec les autres lorsque l'embout est étriqué.

2. Ensemble de la revendication 1, dans lequel l'embout est constitué d'un matériau semi-rigide ou de couches de matériau souple identique ou différent qui lui permet d'adapter sa forme selon la forme d'un fruit.

3. Ensemble de la revendication 1, comprenant en outre au moins l'un parmi : i) un générateur de vide ; ii) un moteur d'inclinaison destiné à déplacer ledit support le long dudit axe principal destiné à incliner un fruit saisi par ledit embout ; et iii) un moteur de rotation destiné à faire tourner ou incliner ledit embout et/ou ledit support le long dudit axe principal.

4. Ensemble de l'une quelconque des revendications précédentes, dans lequel ledit support : i) est extensible et rétractable ; ii) peut tourner le long ledit axe principal ; et/ou iii) est équipé d'une ou de plusieurs articulations pivotantes permettant le pivotement de l'embout par rapport audit axe principal.

5. Ensemble de l'une quelconque des revendications précédentes, dans lequel ledit embout d'aspiration de préhension flexible est : i) fixé audit support le long dudit axe principal ; ii) fixé audit support pivoté à l'écart d'un axe central de celui-ci ; ou iii) monté sur ledit support par un élément de montage pivotant pour un mouvement pivotant généralement vers et à l'écart dudit axe principal.

6. Ensemble de l'une quelconque des revendications précédentes, dans lequel lorsque le mécanisme de verrouillage est dans sa configuration ouverte, les rainures et les renflements ou les saillies sont séparés les uns des autres, et lorsqu'il est dans sa configuration verrouillée, les rainures et les renflements ou les saillies sont en prise les uns avec les autres.

7. Machine de cueillette de fruits comprenant un ou plusieurs ensembles de l'une quelconque des revendications précédentes, dans laquelle lorsque la machine comprend deux desdits ensembles ou plus, le mouvement de chaque ensemble est indépendant de l'autre ou des autres.

8. Machine de cueillette de fruits de la revendication 7, qui est un robot de récolte volant.

9. Procédé permettant la récolte de fruits, comprenant les étapes de montage d'un ou de plusieurs ensembles selon l'une quelconque des revendications 1 à 6 sur une machine de cueillette de fruits, et d'activation de celle-ci, dans lequel : i) l'activation de la machine de cueillette de fruits conduit à une préhension par aspiration d'un fruit par ledit embout d'aspiration, et la cueillette du fruit est réalisée par torsion et/ou inclinaison du fruit jusqu'à ce qu'il soit libéré ; et/ou ii) ledit procédé comprend éventuellement une étape de rotation continue dudit ensemble de préhension pendant sa pénétration dans le feuillage d'un arbre, de sorte que ladite rotation permette la pénétration de l'embout d'aspiration à travers le feuillage de l'arbre.
